(19) **Europäisches Patentamt**
**European Patent Office**
**Office européen des brevets**

(11) **EP 4 307 217 A1**

(12) **EUROPEAN PATENT APPLICATION**
published in accordance with Art. 153(4) EPC

(43) Date of publication:
**17.01.2024 Bulletin 2024/03**

(21) Application number: **21937741.3**

(22) Date of filing: **18.12.2021**

(51) International Patent Classification (IPC):
***G06T 7/00*** *(2017.01)*

(52) Cooperative Patent Classification (CPC):
**G06T 7/00**

(86) International application number:
**PCT/CN2021/139429**

(87) International publication number:
**WO 2022/222519 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.04.2021 CN 202110423683**
**10.08.2021 CN 202110914815**

(71) Applicant: **Huawei Cloud Computing Technologies Co., Ltd.**
**Guizhou 550025 (CN)**

(72) Inventors:
• **DU, Changde**
**Shenzhen, Guangdong 518129 (CN)**
• **JIN, Xin**
**Shenzhen, Guangdong 518129 (CN)**
• **JIANG, Huajie**
**Shenzhen, Guangdong 518129 (CN)**
• **TU, Dandan**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **FAULT IMAGE GENERATION METHOD AND APPARATUS**

(57) A fault image generation method and apparatus are provided. The fault image generation method includes: obtaining a non-fault image and a first fault image, where the non-fault image records a first object that is not faulty, the first fault image records a second object that is faulty, and a type of the first object is different from a type of the second object; and migrating a fault pattern of the second object in the first fault image to the first object in the non-fault image, to obtain a second fault image, where the second fault image presents the first object in a faulty state. A part of an image of a specific type of object is replaced by using a fault pattern that records another type of object, to obtain a second fault image of the specific type of object. This improves universality and flexibility of obtaining the fault pattern, and increases diversity of fault types in the second fault image.

FIG. 7

**Description**

**TECHNICAL FIELD**

This application relates to the computer field, and more specifically, to a fault image generation method and apparatus.

**BACKGROUND**

Artificial intelligence (artificial intelligence, AI) refers to a theory, a method, a technology, and an application system that are used to simulate, extend, and expand human intelligence by using a digital computer or a machine controlled by a digital computer, to perceive an environment, obtain knowledge, and obtain an optimal result by using the knowledge. In other words, artificial intelligence is a branch of computer science and attempts to understand essence of intelligence and produce a new intelligent machine that can react in a manner similar to human intelligence. Artificial intelligence is to research design principles and implementation methods of various intelligent machines, so that the machines have perception, inference, and decision-making functions. Research in the artificial intelligence field includes robotics, natural language processing, computer vision, decision-making and inference, human-machine interaction, recommendation and search, AI basic theories, and the like.

Surface defect detection is an important part of industrial quality inspection and a key step in controlling product quality. This may prevent defective products from entering the market and bringing harm in a process of using the defective products. A fault detection algorithm based on computer vision may use a neural network model to implement surface defect detection and help people eliminate hidden risks quickly. A training process of the neural network model needs a large amount of normal data and fault data. During actual application, an amount of fault data is small, and it is difficult to meet a training requirement of the neural network model.

The fault data may be obtained by manually adjusting the normal data. However, labor costs are high and efficiency is low. Therefore, how to improve efficiency of obtaining the fault data becomes an urgent problem to be resolved.

**SUMMARY**

This application provides a fault image generation method, so that labor costs can be reduced, and processing efficiency can be improved.

According to a first aspect, a fault image generation method is provided. The method includes: obtaining a non-fault image and a first fault image, where the non-fault image records a first object that is not faulty, the first fault image records a second object that is faulty, and a type of the first object is different from a type of the second object; and migrating a fault pattern of the second object in the first fault image to the first object in the non-fault image, to obtain a second fault image, where the second fault image presents the first object in a faulty state.

When there is a small quantity of fault images, the second fault image may be generated by using the non-fault image and the first fault image, so that a fault image that can be used as training data includes the first fault image and the generated second fault image. This effectively increases a quantity of training samples. The first object recorded in the non-fault image and the second object recorded in the fault image do not belong to objects of a same type. To be specific, the non-fault image that records the first object may be processed by using an object other than the first object, to generate the second fault image. A source of the fault pattern is extended, so that it is more conducive to increasing the quantity of training samples, and training sample generation efficiency is effectively improved.

The non-fault image and the first fault image are obtained by collecting objects of different types. The non-fault image is adjusted based on the first fault image that is determined by the second fault image collected from the objects of different types. In other words, a non-fault image of a specific object may be adjusted by using a fault of another type of object, to improve universality of a range in which the first fault image is obtained and increase flexibility of a source of the first fault image. Therefore, when a quantity of images of an object that is faulty and that is of a same type as the first object is small, the second fault image of the first object may be generated by using a first fault image of another type of object and the non-fault image of the first object, to improve flexibility of generating a fault image of a specific type of object.

With reference to the first aspect, in some possible implementations, before the migrating a fault pattern of the second object in the first fault image to the first object in the non-fault image, to obtain a second fault image, the method includes: inputting the non-fault image into a region generation model, to determine a target region that is in the non-fault image and to which the fault pattern is migrated.

The target region in the non-fault image is determined by using the region generation model, so that efficiency can be improved and labor costs can be reduced.

With reference to the first aspect, in some possible implementations, before the inputting the non-fault image into a region generation model, to determine a target region that is in the non-fault image and to which the fault pattern is migrated, the method includes: obtaining a plurality of training images, where the training image records an object that is not faulty and that is of a same type as the first object; obtaining region indication information, where the region indication information indicates a region in which a fault may be generated in the training image; and training the region generation model based on the plurality of training images and the region indication information.

The region generation model is trained by using the training image that records an object that is not faulty and that is of a same type as the first object, and the region indication information that indicates a region in which a fault may be generated in the training image, so that the region generation model has higher accuracy in a result of processing an image of the type to which the first object belongs.

With reference to the first aspect, in some possible implementations, the migrating a fault pattern of the second object in the first fault image to the first object in the non-fault image, to obtain a second fault image includes: performing shape transformation on the fault pattern; and migrating a transformed fault pattern to the target region in the non-fault image, to obtain the second fault image.

The non-fault image is adjusted by using the transformed fault pattern, so that adjustment is more flexible, and a quantity and diversity of third images that may be obtained may be increased.

With reference to the first aspect, in some possible implementations, the shape transformation includes size stretching, compression, or brightness change.

According to a second aspect, a fault image generation method is provided. The method includes: obtaining a non-fault image and a first fault image, where the non-fault image records a first object that is not faulty, and the first fault image records a second object that is faulty; inputting the non-fault image into a region generation model, to determine a target region that is in the non-fault image and to which a fault pattern of the second object in the first fault image is migrated; and migrating the fault pattern to the target region in the non-fault image, to obtain a second fault image, where the second fault image presents the first object in a faulty state.

The target region in the non-fault image is determined by using the region generation model, and the first fault image is migrated to the target region, to obtain the second fault image, so that the target region is no longer determined manually. This can improve efficiency and reduce labor costs.

With reference to the second aspect, in some possible implementations, a type of the first object is different from a type of the second object.

A region in which the first object in the non-fault image is located is migrated by using the second fault image that is of a type different from that of the first object, to generate the second fault image. The type of the second object is no longer required to be the same as the type of the first object. This reduces a limitation on the type of the object recorded in the first fault image, improves flexibility of obtaining the first fault image, and increases universality of a source of the first fault image. Therefore, when a quantity of fault images of a type of the object collected in the non-fault image is small, a fault image of the type of the object may be generated, to improve applicability of the fault image generation method provided in this embodiment of this application.

With reference to the second aspect, in some possible implementations, before the inputting the non-fault image into a region generation model, to determine a target region that is in the non-fault image and to which a fault pattern of the second object in the first fault image is migrated, the method further includes: obtaining a plurality of training images and region indication information, where the training image records an object that is not faulty and that is of a same type as the first object, and the region indication information indicates a region in which a fault may be generated in the training image; and training the region generation model based on the region indication information and the plurality of training images.

The region generation model is trained by using the training image that records an object of a same type as the first object and the region indication information that indicates a region in which a fault may be generated in the training image, so that the region generation model is more targeted, and is applicable to the type of the first object in the non-fault image, and accuracy of a target location determined by the region generation model is improved.

With reference to the second aspect, in some possible implementations, the migrating the fault pattern to the target region in the non-fault image, to obtain a second fault image includes: performing transformation on the fault pattern; and migrating a transformed fault pattern to the target region in the non-fault image, to obtain the second fault image.

The non-fault image is adjusted by using the transformed fault pattern, so that a manner of generating the second fault image is more flexible, and a quantity and diversity of third images that may be obtained may be increased.

With reference to the second aspect, the shape transformation includes size stretching, compression, or brightness change.

According to a third aspect, a fault image generation apparatus is provided. The apparatus includes modules configured to perform the method according to any one of the first aspect or the second aspect and the implementations of the first aspect or the second aspect.

According to a fourth aspect, an electronic device is provided. The electronic device includes a memory and a processor. The memory is configured to store program instructions; and when the program instructions are executed in the processor, the processor is configured to perform the method according to any one of the first aspect or the second aspect and the implementations of the first aspect or the second aspect.

The processor in the fourth aspect may be a central processing unit (central processing unit, CPU), or may be a combination of a CPU and a neural network operation processor. The neural network operation processor herein may include a graphics processing unit (graphics processing unit, GPU), a neural-network processing unit (neural-network processing unit, NPU), a tensor processing unit (tensor processing unit, TPU), and the like. The TPU is an artificial intelligence accelerator-specific integrated circuit customized by Google (Google) for machine learning.

According to a fifth aspect, a computer-readable medium is provided. The computer-readable medium stores program code to be executed by a device, and the program code is used to perform the method according to any one of the first aspect or the second aspect and the implementations of the first aspect or the second aspect.

According to a sixth aspect, a computer program product including instructions is provided. When the computer program product runs on a computer, the computer is enabled to perform the method according to any one of the first aspect or the second aspect and the implementations of the first aspect or the second aspect.

According to a seventh aspect, a chip is provided. The chip includes a processor and a data interface. The processor reads, through the data interface, instructions stored in a memory, to perform the method according to any one of the first aspect or the second aspect and the implementations of the first aspect or the second aspect.

Optionally, in an implementation, the chip may further include the memory, and the memory stores the instructions. The processor is configured to execute the instructions stored in the memory; and when the instructions are executed, the processor is configured to perform the method according to any one of the first aspect or the second aspect and the implementations of the first aspect or the second aspect.

The foregoing chip may be specifically a field-programmable gate array (field-programmable gate array, FPGA) or an application-specific integrated circuit (application-specific integrated circuit, ASIC).

**BRIEF DESCRIPTION OF DRAWINGS**

FIG. 1 is a schematic diagram of a structure of a system architecture according to an embodiment of this application;
FIG. 2 is a schematic diagram of a structure of a convolutional neural network according to an embodiment of this application;
FIG. 3 is a schematic diagram of a structure of another convolutional neural network according to an embodiment of this application;
FIG. 4 is a schematic diagram of a hardware structure of a chip according to an embodiment of this application;
FIG. 5 is a schematic diagram of a system architecture according to an embodiment of this application;
FIG. 6 is a schematic flowchart of a fault image generation method;
FIG. 7 is a schematic flowchart of a fault image generation method according to an embodiment of this application;
FIG. 8 is a schematic diagram of a structure of an image processing system according to an embodiment of this application;
FIG. 9 is a schematic diagram of a structure of a fault image generation method according to an embodiment of this application;
FIG. 10 is a schematic diagram of a structure of a neural network training apparatus according to an embodiment of this application;
FIG. 11 is a schematic diagram of a structure of a fault image generation apparatus according to an embodiment of this application;
FIG. 12 is a schematic diagram of a structure of a computing device according to an embodiment of this application;
FIG. 13 is a schematic diagram of a structure of a computing device cluster according to an embodiment of this application;
FIG. 14 is a schematic diagram of a structure of another computing device cluster according to an embodiment of this application; and
FIG. 15 is a schematic diagram of a structure of another computing device cluster according to an embodiment of this application.

**DESCRIPTION OF EMBODIMENTS**

The following describes technical solutions in embodiments of this application with reference to the accompanying drawings in embodiments of this application. It is clearly that the described embodiments are merely some rather than all of embodiments of this application. All other embodiments obtained by a person of ordinary skill in the art based on embodiments of this application without creative efforts shall fall within the protection scope of this application.

Because embodiments of this application relate to massive applications of a neural network, for ease of understanding, the following first describes terms and concepts related to the neural network that may be used in embodiments of this application.

(1) Neural network

The neural network may include a neuron. The neuron may be an operation unit for which $x_s$ and an intercept of 1 are used as an input. An output of the operation unit may be as follows:

$$h_{W,b}(x) = f(W^T x) = f(\sum_{s=1}^{n} W_s x_s + b) \quad (1\text{-}1),$$

where
s=1, 2, ..., or n, n is a natural number greater than 1, $W_s$ is a weight of $x_s$, and b is bias of the neuron. f is an activation function (activation function) of the neuron, and is used to introduce a nonlinear feature into the neural network, to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of one neuron may be an input of another neuron. An input of each neuron may be connected to a local receptive field of a previous layer, to extract a feature of the local receptive field. The local receptive field may be a region including several neurons.

(2) Deep neural network

The deep neural network (deep neural network, DNN), also referred to as a multi-layer neural network, may be understood as a neural network having a plurality of hidden layers. The DNN is divided based on locations of different layers, so that the neural network in the DNN may be classified into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer.

Although the DNN seems to be complex, the DNN is actually not complex in terms of work at each layer, and is simply expressed as the following linear relationship expression: $\vec{y} = \alpha(W\vec{x} + \vec{b})$, where $\vec{x}$ is an input vector, $\vec{y}$ is an output vector, $\vec{b}$ is an offset vector, $W$ is a weight matrix (also referred to as a coefficient), and $\alpha()$ is an activation function. At each layer, such a simple operation is performed on the input vector $\vec{x}$, to obtain the output vector $\vec{y}$. Because the DNN has a large quantity of layers, there are also a large quantity of coefficients $W$ and a large quantity of offset vectors $\vec{b}$. These parameters are defined in the DNN as follows: The coefficient W is used as an example. It is assumed that in a three-layer DNN, a linear coefficient from the fourth neuron at the second layer to the second neuron at the third layer is defined as $W_{24}^{3}$. A superscript 3 represents a layer number of a layer corresponding to the coefficient W, and a subscript corresponds to an index 2 of the output third layer and an index 4 of the input second layer.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that there is no parameter W for the input layer. In the deep neural network, more hidden layers enable the network to be more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of a trained deep neural network (a weight matrix including vectors W at a plurality of layers).

(3) Convolutional neural network

The convolutional neural network (convolutional neural network, CNN) is a deep neural network with a convolutional structure. The convolutional neural network includes a feature extractor that includes a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neural units that are in a rectangular arrangement. Neural units in a same feature plane share a weight, and the weight shared herein is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

(4) Recurrent neural network (recurrent neural network, RNN): The recurrent neural network is used to process sequence data. In a conventional neural network model, layers from an input layer to a hidden layer and to an output layer are fully connected, and nodes at each layer are not connected. Although this common neural network has resolved a plurality of problems, it is still incapable of resolving a plurality of problems. For example, to predict a next word in a sentence, a previous word usually needs to be used, because the previous word and the next word in the sentence are not independent. The RNN is referred to as a recurrent neural network because a current output of a sequence is also related to a previous output. A specific representation is that the network memorizes previous information and applies the information to calculation of a current output. To be specific, nodes at the hidden layer are no longer not connected but connected. In addition, an input at the hidden layer includes not only an output at the input layer but also an output at the hidden layer at a previous moment. Theoretically, the RNN can process sequence data of any length. Training for the RNN is the same as training for a conventional CNN or DNN.

Why is a recurrent neural network still needed if a convolutional neural network already exist? The reason is simple. In the convolutional neural network, there is a premise that elements are independent of each other, and an input and an output are also independent, for example, a cat and a dog. However, in the real world, a plurality of elements are interconnected. For example, stocks change over time. For another example, a person says: "I love traveling, and my favorite place is Yunnan. I will go there when I have a chance." In this case, if filling in the blank needs to be completed, humans should know that "Yunnan" is filled in. Humans perform inference based on a context, but how can a machine do this? Therefore, the RNN is emerged. The RNN is designed to enable machines to have a memory capability as humans. Therefore, an output of the RNN depends on current input information and historical memory information.

(5) Loss function

In a process of training a deep neural network, because it is expected that an output of the deep neural network is as close as possible to a value that actually needs to be predicted, a current predicted value of the network and an actually expected target value may be compared, and then a weight vector of each layer of the neural network is updated based on a difference between the current predicted value and the target value (where certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain a difference between the predicted value and the target value through comparison" needs to be predefined. This is a loss function (loss function) or an objective function (objective function). The loss function and the objective function are important equations for measuring the difference between the predicted value and the target value. The loss function is used as an example. A higher output value (loss) of the loss function indicates a larger difference. Therefore, training of the deep neural network is a process of minimizing the loss as much as possible.

(6) Back propagation algorithm

In a training process, a neural network may correct a value of a parameter of an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

(7) Generative adversarial network

The generative adversarial network (generative adversarial network, GAN) is a deep learning model. The model includes at least two modules. One module is a generative model (generative model), and the other module is a discriminative model (discriminative model). The two modules perform mutual game learning to generate a better output. A basic principle of the GAN is as follows: A GAN for generating an image is used as an example. It is assumed that there are two networks: G (generator) and D (discriminator). G is a network for generating an image. G receives random noise z, and generates an image based on the noise, which is recorded as G(z). D is a discriminative network used to discriminate whether an image is "real". In an ideal state, G may generate an image G(z) that is "indistinguishable from a real one", and it is difficult for D to discriminate whether the image generated by G is real, that is, D(G(z))=0.5. In this way, an excellent generative model G is obtained, and G may be used to generate an image.

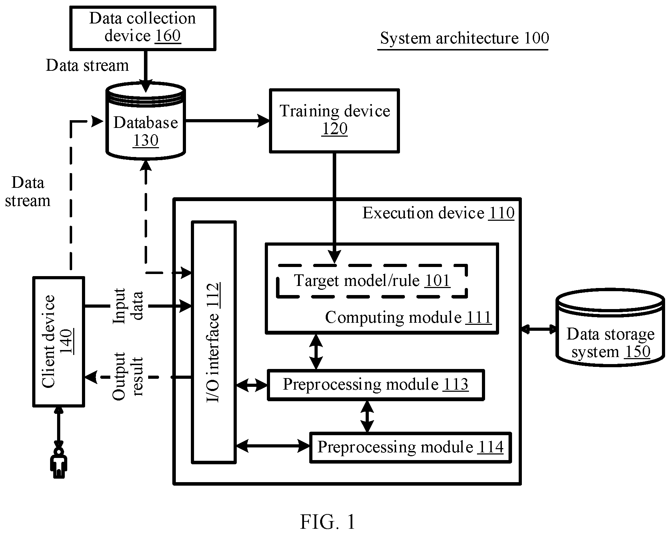

As shown in FIG. 1, an embodiment of this application provides a system architecture 100. In FIG. 1, a data collection device 160 is configured to collect training data. For a data processing method in embodiments of this application, the training data may include a training image, training audio, a training video, a training text, and the like.

After collecting the training data, the data collection device 160 stores the training data in a database 130, and a training device 120 obtains a target model/rule 101 through training based on the training data maintained in the database 130.

The following describes how the training device 120 obtains the target model/rule 101 based on the training data. The training device 120 processes the input training data, and compares output training information with annotation information corresponding to the training data, until a difference between the training information output by the training device 120 and the annotation information corresponding to the training data is less than a specific threshold. In this way, training of the target model/rule 101 is completed.

The target model/rule 101 can be used to implement the data processing method in embodiments of this application. The target model/rule 101 in embodiments of this application may be specifically a neural network. It should be noted that, during actual application, the training data maintained in the database 130 is not necessarily all collected by the data collection device 160, or may be received from another device. In addition, it should be noted that the training device 120 does not necessarily train the target model/rule 101 completely based on the training data maintained in the database 130, or may obtain training data from a cloud or another place to perform model training. The foregoing descriptions should not be construed as a limitation on embodiments of this application.

The target model/rule 101 obtained through training by the training device 120 may be applied to different systems or devices, for example, applied to an execution device 110 shown in FIG. 1. The execution device 110 may be a terminal, for example, a mobile phone terminal, a tablet computer, a laptop computer, an augmented reality (augmented reality, AR) /virtual reality (virtual reality, VR) terminal, or a vehicle-mounted terminal, or may be a server, a cloud, or the like. In FIG. 1, an input/output (input/output, I/O) interface 112 is configured in the execution device 110, and is configured to exchange data with an external device. A user may input data into the I/O interface 112 through a client device 140. In embodiments of this application, the input data may include to-be-processed data input by the client device.

A preprocessing module 113 and a preprocessing module 114 are configured to perform preprocessing based on the input data (for example, the to-be-processed data) received by the I/O interface 112. In embodiments of this application, the preprocessing module 113 and the preprocessing module 114 may not exist (or only one of the preprocessing module 113 and the preprocessing module 114 exists), and a computing module 111 is directly configured to process the input data.

In a process in which the execution device 110 preprocesses the input data, or in a process in which the computing module 111 of the execution device 110 performs related processing such as computing, the execution device 110 may invoke data, code, and the like in a data storage system 150 for corresponding processing, and may further store, in the data storage system 150, data, instructions, and the like that are obtained through corresponding processing.

Finally, the I/O interface 112 returns a processing result to the client device 140, to provide the processing result to the user.

It should be noted that the training device 120 may generate corresponding target models/rules 101 for different targets or different tasks based on different training data. The corresponding target models/rules 101 may be used to implement the foregoing targets or complete the foregoing tasks, to provide a required result for the user.

In a case shown in FIG. 1, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input into the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input into the I/O interface 112 and the output result output from the I/O interface 112 that are shown in the figure.

It should be noted that FIG. 1 is merely a schematic diagram of a system architecture according to an embodiment of this application. A location relationship between a device, a component, a module, and the like shown in the figure constitutes no limitation. For example, in FIG. 1, the data storage system 150 is an external memory relative to the execution device 110. In another case, the data storage system 150 may alternatively be disposed in the execution device 110.

As shown in FIG. 1, the target model/rule 101 is obtained through training by the training device 120. The target model/rule 101 may be a neural network in embodiments of this application. Specifically, the neural network used in embodiments of this application may be a CNN, a deep convolutional neural network (deep convolutional neural network, DCNN), a recurrent neural network (recurrent neural network, RNN), or the like.

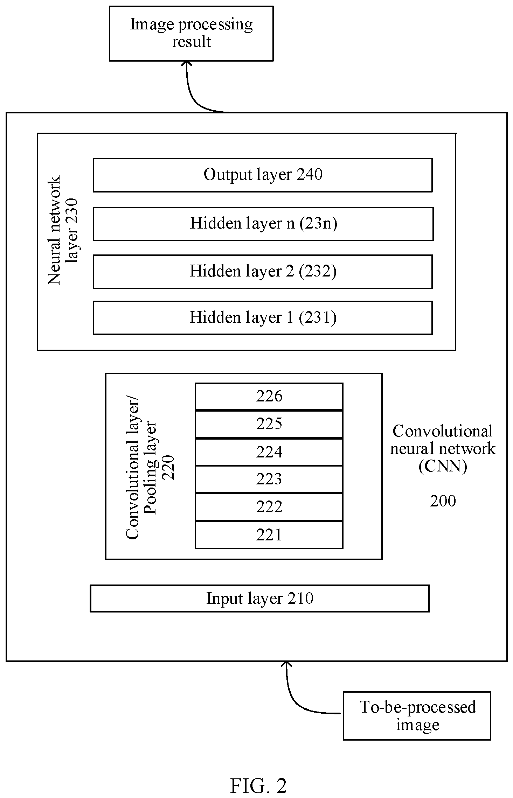

Because the CNN is a quite common neural network, the following focuses on a structure of the CNN with reference to FIG. 2. As described in the foregoing basic concepts, a convolutional neural network is a deep neural network with a convolutional structure, and is a deep learning (deep learning) architecture. The deep learning architecture refers to performing multilevel learning at different abstract levels by using a machine learning algorithm. As a deep learning architecture, the CNN is a feed-forward (feed-forward) artificial neural network, and each neuron in the feed-forward artificial neural network may respond to data input into the feed-forward artificial neural network. The following uses an example in which the input data is an image for description.

A structure of a neural network specifically used in the data processing method in embodiments of this application may be shown in FIG. 2. In FIG. 2, a convolutional neural network (CNN) 200 may include an input layer 210, a convolutional layer/pooling layer 220 (where the pooling layer is optional), and a neural network layer 230. The input layer 210 may obtain to-be-processed data, and send the obtained to-be-processed data to the convolutional layer/pooling layer 220 and the subsequent neural network layer 230 for processing, to obtain a data processing result. The following uses image processing as an example to describe in detail an internal layer structure of the CNN 200 in FIG. 2.

Convolutional layer/Pooling layer 220:

Convolutional layer:

As shown in FIG. 2, for example, the convolutional layer/pooling layer 220 may include layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the layer 223 is a pooling layer, the layers 224 and 225 are convolutional layers, and the layer 226 is a pooling layer. To be specific, an output of a convolutional layer may be used as an input of a subsequent pooling layer, or may be used as an input of another convolutional layer to continue to perform a convolution operation.

The following uses the convolutional layer 221 as an example to describe an internal working principle of one convolutional layer.

The convolutional layer 221 may include a plurality of convolution operators. The convolution operator is also referred to as a kernel, and a function of the convolution operator in data processing is equivalent to a filter for extracting specific information from an input image. The convolution operator may essentially be a weight matrix, and the weight matrix is usually predefined. In a process of performing a convolution operation on an image, the weight matrix usually processes pixels at a granularity level of one pixel (or two pixels or the like, which depends on a value of a stride stride) in a horizontal direction on an input image, to extract a specific feature from the image. A size of the weight matrix should be related to a size of the image. It should be noted that a depth dimension (depth dimension) of the weight matrix is the same as a depth dimension of the input image. In a process of performing a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. The plurality of weight matrices have the same size (rows×columns), and convolutional feature maps extracted by the plurality of weight matrices with the same size have a same size. Then, the plurality of extracted convolutional feature maps with the same size are combined to form an output of the convolution operation.

Weight values in these weight matrices need to be obtained through a lot of training during actual application. Each weight matrix formed by using the weight values obtained through training may be used to extract information from an input image, to enable the convolutional neural network 200 to perform correct prediction.

When the convolutional neural network 200 has a plurality of convolutional layers, a larger quantity of general features are usually extracted at an initial convolutional layer (for example, the convolutional layer 221). The general features may also be referred to as low-level features. As a depth of the convolutional neural network 200 increases, a feature extracted at a more subsequent convolutional layer (for example, the convolutional layer 226) is more complex, for example, a high-level semantic feature. A feature with higher semantics is more applicable to a to-be-resolved problem.

Pooling layer:

Because a quantity of training parameters usually needs to be reduced, a pooling layer usually needs to be periodically introduced after a convolutional layer. To be specific, for the layers 221 to 226 in the layer 220 shown in FIG. 2, one convolutional layer may be followed by one pooling layer, or a plurality of convolutional layers may be followed by one or more pooling layers. In an image processing process, the pooling layer is only used to reduce a space size of an image. The pooling layer may include an average pooling operator and/or a maximum pooling operator, to perform sampling on an input image to obtain an image with a small size. The average pooling operator may be used perform calculation on pixel values in the image in a specific range, to generate an average value, and the average value is used as an average pooling result. The maximum pooling operator may be used to select, in a specific range, a pixel with a maximum value in the range as a maximum pooling result. In addition, similar to that a size of a weight matrix at a convolutional layer needs to be related to a size of an image, an operator at the pooling layer also needs to be related to a size of an image. A size of an image output after processing from the pooling layer may be less than a size of an image input into the pooling layer. Each pixel in the image output from the pooling layer represents an average value or a maximum value of a corresponding sub-region of the image input into the pooling layer.

Neural network layer 230:

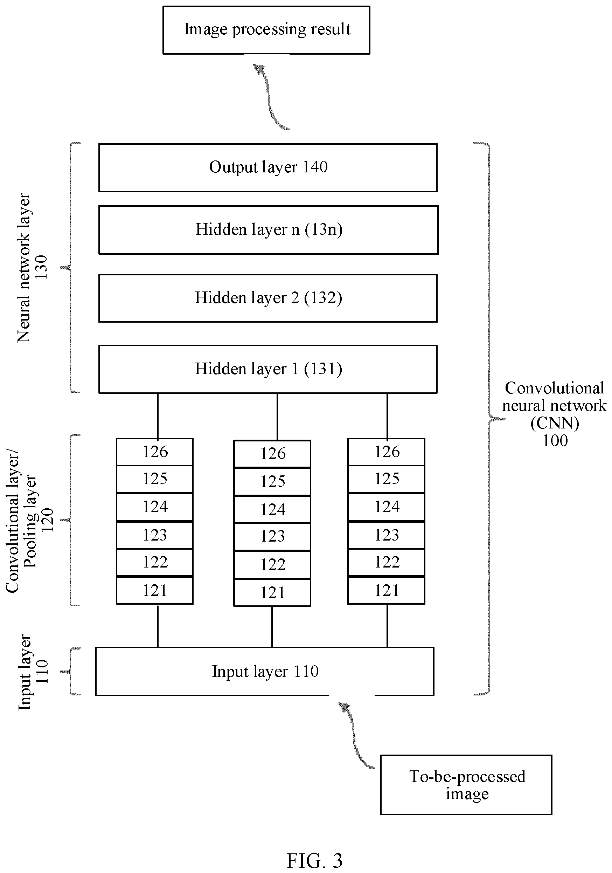

After processing performed at the convolutional layer/pooling layer 220, the convolutional neural network 200 still cannot output required output information. As described above, at the convolutional layer/pooling layer 220, only a feature is extracted, and parameters brought by an input image are reduced. However, to generate final output information (required class information or other related information), the convolutional neural network 200 needs to use the neural network layer 230 to generate an output of one required class or a group of required classes. Therefore, the neural network layer 230 may include a plurality of hidden layers (231, 232, ..., and 23n shown in FIG. 2) and an output layer 240. Parameters included in the plurality of hidden layers may be obtained through pre-training based on related training data of a specific task type. For example, the task type may include image recognition, image categorization, super-resolution image reconstruction, and the like.
The plurality of hidden layers in the neural network layer 230 are followed by the output layer 240, namely, the last layer of the entire convolutional neural network 200. The output layer 240 has a loss function similar to cross entropy for classification, and is specifically configured to calculate a prediction error. Once forward propagation (for example, propagation in a direction from 210 to 240 in FIG. 2 is forward propagation) of the entire convolutional neural network 200 is completed, back propagation (for example, propagation in a direction from 240 to 210 in FIG. 2 is back propagation) starts to update the weight value and a deviation of each layer mentioned above, to reduce a loss of the convolutional neural network 200 and an error between a result output by the convolutional neural network 200 through the output layer and an ideal result.
A structure of a neural network specifically used in the data processing method in embodiments of this application may be shown in FIG. 3. In FIG. 3, a convolutional neural network (CNN) 200 may include an input layer 110, a convolutional layer/pooling layer 120 (where the pooling layer is optional), and a neural network layer 130. In comparison with FIG. 2, in FIG. 3, at the convolutional layer/pooling layer 120, a plurality of convolutional layers/pooling layers are in parallel, and all features that are separately extracted are input into the neural network layer 130 for processing.
It should be noted that the convolutional neural network shown in FIG. 2 and the convolutional neural network shown in FIG. 3 are merely examples of two possible convolutional neural networks used in the data processing method in embodiments of this application. During specific application, the convolutional neural network used in the data processing method in embodiments of this application may alternatively exist in a form of another network model.

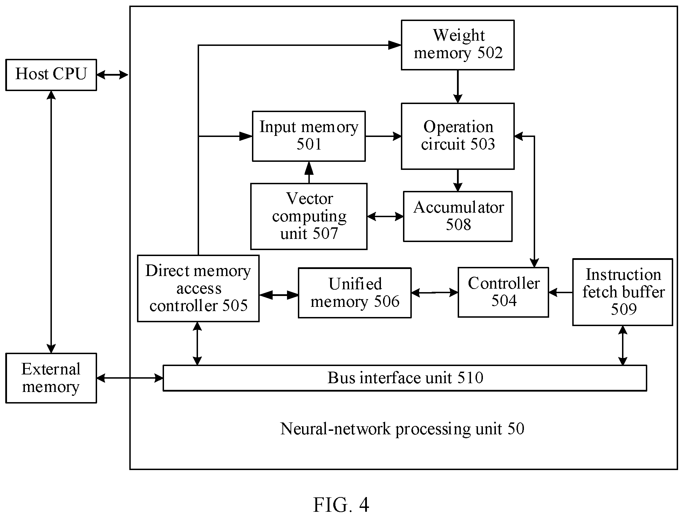

FIG. 4 shows a hardware structure of a chip according to an embodiment of this application. The chip includes a neural-network processing unit 50. The chip may be disposed in the execution device 110 shown in FIG. 1, and is configured to complete computing work of the computing module 111. The chip may alternatively be disposed in the training device 120 shown in FIG. 1, and is configured to complete training work of the training device 120 and output the target model/rule 101. Algorithms at all layers in the convolutional neural network shown in FIG. 2 and the convolutional neural network shown in FIG. 3 may be implemented in the chip shown in FIG. 4.
The neural-network processing unit NPU 50 serves as a coprocessor, and may be disposed on a host central processing unit (central processing unit, CPU) (host CPU). The host CPU assigns a task. A core part of the NPU is an operation circuit 503, and a controller 504 controls the operation circuit 503 to extract data in a memory (a weight memory or an input memory) and perform an operation.
In some implementations, the operation circuit 503 internally includes a plurality of process engines (process engines, PEs). In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general-purpose matrix processor.

For example, it is assumed that there is an input matrix A, a weight matrix B, and an output matrix C. The operation circuit fetches, from a weight memory 502, data corresponding to the matrix B, and buffers the data on each PE in the operation circuit. The operation circuit fetches data of the matrix A from an input memory 501, to perform a matrix operation on the matrix B, and stores an obtained partial result or an obtained final result of the matrix in an accumulator (accumulator) 508.

A vector computing unit 507 may perform further processing of vector multiplication, vector addition, an exponential operation, a logarithmic operation, value comparison, and the like on an output of the operation circuit. For example, the vector computing unit 507 may be configured to perform network computing of pooling (pooling), batch normalization (batch normalization), local response normalization (local response normalization), and the like at a non-convolutional layer/non-FC layer in the neural network.

In some implementations, the vector computing unit 507 can store a processed output vector in a unified memory 506. For example, the vector computing unit 507 may apply a nonlinear function to the output of the operation circuit 503, for example, a vector of an accumulated value, to generate an activation value. In some implementations, the vector computing unit 507 generates a normalized value, a combined value, or both a normalized value and a combined value. In some implementations, the processed output vector can be used as an activation input to the operation circuit 503, for example, used at a subsequent layer in the neural network.

A unified memory 506 is configured to store input data and output data.

For weight data, a direct memory access controller (direct memory access controller, DMAC) 505 directly transfers input data in an external memory to the input memory 501 and/or the unified memory 506, stores the weight data in the external memory in the weight memory 502, and stores the data in the unified memory 506 in the external memory.

A bus interface unit (bus interface unit, BIU) 510 is configured to implement interaction between the host CPU, the DMAC, and an instruction fetch buffer 509 through a bus.

The instruction fetch buffer (instruction fetch buffer) 509 connected to the controller 504 is configured to store instructions used by the controller 504.

The controller 504 is configured to invoke the instructions buffered in the instruction fetch buffer 509, to control a working process of the operation accelerator.

Generally, the unified memory 506, the input memory 501, the weight memory 502, and the instruction fetch buffer 509 each are an on-chip (On-Chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

Operations at all layers in the convolutional neural network shown in FIG. 2 and the convolutional neural network shown in FIG. 3 may be performed by the operation circuit 503 or the vector computing unit 507.

The execution device 110 in FIG. 1 described above can perform the steps of the data processing method in embodiments of this application. The CNN model shown in FIG. 2 and the CNN model shown in FIG. 3 and the chip shown in FIG. 4 may also be configured to perform the steps of the data processing method in embodiments of this application. The following describes in detail the neural network training method in embodiments of this application and the data processing method in embodiments of this application with reference to the accompanying drawings.

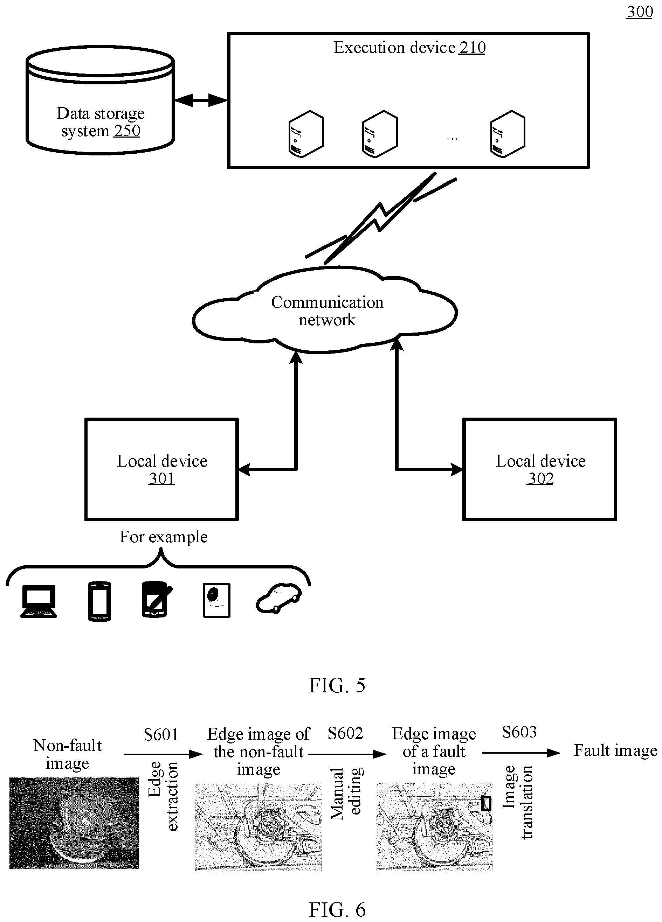

As shown in FIG. 5, an embodiment of this application provides a system architecture 300. The system architecture includes a local device 301, a local device 302, an execution device 210, and a data storage system 250. The local device 301 and the local device 302 are connected to the execution device 210 through a communication network.

The execution device 210 may be implemented by one or more servers. Optionally, the execution device 210 may cooperate with another computing device, for example, a device such as a data memory, a router, or a load balancer. The execution device 210 may be disposed on one physical site, or distributed on a plurality of physical sites. The execution device 210 may implement the data processing method in embodiments of this application by using data in the data storage system 250 or by invoking program code in the data storage system 250.

Specifically, the execution device 210 may perform the steps of the data processing method provided in embodiments of this application.

A user may operate user equipment (for example, the local device 301 and the local device 302) of the user to interact with the execution device 210. Each local device may represent any computing device, for example, a personal computer, a computer workstation, a smart phone, a tablet computer, an intelligent camera, a smart automobile, another type of cellular phone, a media consumption device, a wearable device, a set-top box, or a game console.

A local device of each user may interact with the execution device 210 through a communication network of any communication mechanism/communication standard. The communication network may be a wide area network, a local area network, a point-to-point connection, or any combination thereof.

In an implementation, the local device 301 and the local device 302 obtain a related parameter of a target neural network from the execution device 210, deploy the target neural network on the local device 301 and the local device 302, and perform image classification, image processing, or the like through the target neural network.

In another implementation, a target neural network may be directly deployed on the execution device 210. The execution device 210 obtains to-be-processed data from the local device 301 and the local device 302, and performs classification or another type of processing on the to-be-processed data based on the target neural network.

The execution device 210 may alternatively be a cloud device. In this case, the execution device 210 may be deployed on a cloud. Alternatively, the execution device 210 may be a terminal device. In this case, the execution device 210 may be deployed on a user terminal side. This is not limited in this embodiment of this application.

Surface defect detection is an important part of industrial quality inspection and a key step in controlling product quality. This may prevent defective products from entering the market and bringing harm in a process of using the defective products. For example, in a railway scenario, a component of a train may be damaged or faulty as a service life increases, and a surface of the component is defective. If a surface defect of the component is not found in a timely manner, a major accident may occur in a process in which the train continues to run. Surface defect detection may also be applied in various fields such as power grid and manufacturing.

A fault detection algorithm based on computer vision may use a neural network model to implement surface defect detection and help people eliminate hidden troubles quickly. A training process of the neural network model needs a large amount of normal data and fault data.

During actual application, it is often faced with a problem of small samples, that is, a quantity of fault images is quite small, which does not meet a data volume requirement for training the neural network model. The quantity of fault images is small, and fault images used to train the neural network model may not include images corresponding to some fault types; or even if the fault images include all fault types, there is quite little data of some fault types. Consequently, a fault identification capability of the neural network model obtained through training is limited.

FIG. 6 is a schematic flowchart of a fault image generation method.

S601: Extract a first edge image of a non-fault image by using an edge extraction model.

Image collection may be performed on a device without a surface defect to obtain a non-fault image. In other words, an object in the non-fault image may have no surface defect.

An edge image may also be referred to as a side image. An edge image of the non-fault image is an image obtained by performing edge extraction on the non-fault image. An edge is an intersection of an image region and another attribute region, is a place in which the region attribute changes abruptly, and is a place of most concentrated image information. The image edge includes rich information.

S602: Manually edit the edge image of the non-fault image to obtain an edge image of a fault image. In the fault image, only a partial region is abnormal, and another region is the same as that of the non-fault image.

S603: Process the edge image of the fault image by using an image translation model, to form the fault image.

Therefore, a neural network model may be trained based on the fault image and the non-fault image that are obtained in S601 to S603. The neural network model obtained through training may be used for surface defect detection.

In the method 600, the non-fault image is manually edited. As a result, an automation degree is low and costs are high.

To resolve the foregoing problem, an embodiment of this application provides a fault image generation method.

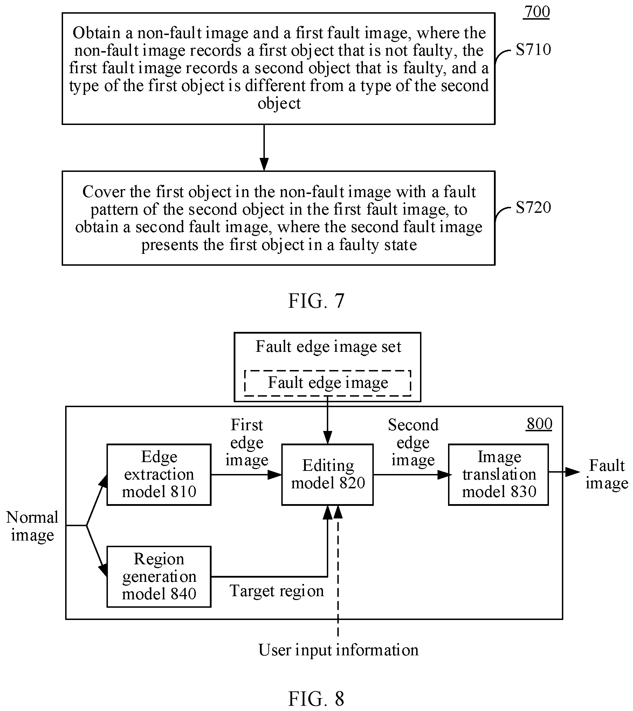

FIG. 7 is a schematic flowchart of a fault image generation method according to an embodiment of this application.

The fault image generation method 700 includes S710 and S720.

S710: Obtain a non-fault image (non-faulty image) and a first fault image, where the non-fault image records a first object that is not faulty, the first fault image records a second object that is faulty, and a type of the first object is different from a type of the second object.

In other words, the non-fault image and the first fault image are obtained by collecting objects of different types.

A type may also be referred to as a category, and is a kind formed by things having a common feature. Objects of a same type have a same property or feature, and objects of different types have different properties or features. Properties of an object may include a function, a material, a material type, a color, and the like. Different types of objects have different properties. For example, a material of a train compartment surface is different from a material of a wall, the non-fault image may be obtained by collecting the train compartment surface, and the first fault image may be obtained by collecting the wall.

S720: Migrate a fault pattern of the second object in the first fault image to the first object in the non-fault image (for example, cover the first object in the non-fault image, or image layer superposition), to obtain a second fault image. The second fault image presents the first object in a faulty state.

For example, the first fault image may record a wall crack, and the non-fault image may record a compartment surface without a fault. The wall crack may be used to adjust a partial region of the compartment surface without the fault, to obtain an image of a compartment surface with a crack.

Through S710 and S720, the non-fault image may be processed based on the first fault image, to obtain the second fault image. Therefore, when a quantity of fault images of a same type is small and a quantity of non-fault images is large, non-fault images may be adjusted by using different types of fault images, to generate a large quantity of fault images.

Different types of objects are recorded in the first fault image and the non-fault image, that is, the first fault image and the non-fault image are obtained by collecting different objects. Therefore, an image of an object recorded in the non-fault image may be adjusted by using faults of different types of objects, to improve universality of obtaining the first fault image and increase flexibility of a source of the first fault image. Therefore, when a quantity of fault images corresponding to a type of the object recorded in the non-fault image is small, a fault image of the type of the object may be generated by using a fault image of another type of object, and applicability of generating the fault image is high, increasing diversity of fault types in the second fault image.

The fault pattern may be obtained based on the first fault image. The fault pattern may be a fault region of the second object in the first fault image. Alternatively, the fault pattern may be obtained by performing edge extraction on a fault region of the second object in the first fault image.

The non-fault image may be a natural scene image, or may be an edge image.

When either of the non-fault image and the first fault image is a natural scene image, the natural scene image may be processed by using an edge extraction model, to obtain an edge image corresponding to the non-fault image and an edge image corresponding to the first fault image.

It should be understood that, when an image is a natural scene image, an edge image corresponding to the image may be an edge image obtained by processing the image by using the edge extraction model; and an image is an edge image, and an edge image corresponding to the image is the image.

A partial region in which the first object is located in the edge image corresponding to the non-fault image may be replaced with a fault pattern in the edge image corresponding to the first fault image, and a replaced edge image is processed by using an image translation model, to obtain a natural scene image. The second fault image may be a replaced edge image, or the second fault image may be a natural scene image obtained through processing of the image translation model.

The image translation model may be obtained through training by using a first training data set. The first training data set includes a third image and an edge image corresponding to the third image, and the third image is a natural scene image. A type of an object recorded in the third image may be the same as that of the first object. In other words, the third image and the non-fault image are obtained by collecting objects of a same type. The image translation model may be an AI model obtained through training. The object recorded in the third image may have a fault, or may have no fault.

The edge image corresponding to the third image may be processed by using an initial image translation model, to obtain a translated image. The initial image translation model is adjusted to minimize a difference between the translated image and the third image. An adjusted initial image translation model is used to process an edge image corresponding to another third image until the difference converges gradually, to obtain the image translation model.

The third image and the non-fault image are obtained by collecting the objects of the same type. The image translation model is trained by using the third image and the edge image corresponding to the third image, so that the image translation model is targeted, and accuracy of the image translation model is improved.

In S720, shape transformation may be performed on the fault pattern, and a transformed fault pattern covers the first object in the non-fault image, to obtain the second fault image.

The shape transformation may include style transformation such as deformation and brightness change, and the deformation may be, for example, stretching or compression. In this way, the non-fault image is adjusted more flexibly, and a quantity and diversity of obtained second fault images can be increased.

The first fault image may cover a target region of the non-fault image, to obtain the second fault image.

The target region of the non-fault image may be determined based on location information input by a user, or may be determined by using a region generation model.

The non-fault image may be processed by using the region generation model, to obtain the target region. The target region of the non-fault image is determined by using the region generation model, and the fault image covers the target region of the non-fault image, to obtain the second fault image. This can improve efficiency and reduce labor costs.

Shape transformation may be performed on the fault pattern of the first fault image based on the target region determined by using the region generation model, that is, a size of a transformed fault pattern is less than or equal to a size of the target region. Therefore, the generated second fault image is more accurate.

The region generation model may be an AI model obtained through training.

A plurality of training images may be obtained, where the training image records an object that is not faulty and that is of the same type as the first object. Region indication information may be obtained, where the region indication information indicates a region in which a fault may be generated in the training image. Then, the region generation model may be trained based on the plurality of training images and the region indication information.

FIG. 8 is a schematic diagram of a structure of an image processing system according to an embodiment of this application.

The image processing system 800 includes an edge extraction model 810, an editing model 820, and an image translation model 830. The image processing system 800 may further include a region generation model 840.

The edge extraction model 810, the image translation model 830, and the region generation model 840 may be neural network models obtained through training, for example, may be CNN models. The image translation model 830 may use a GAN, and may select mature algorithms such as pix2pix, pix2pixHD, a cycle-consistent generative adversarial network (cycle-consistent generative adversarial network, CycleGAN), and unsupervised image-to-image translation (unsupervised image-to-image translation, UNIT).

The image processing system 800 is configured to process an input image based on a fault edge image, to obtain a fault image. An image input into the image processing system 800 may be a non-fault image.

The edge extraction model 810 may perform edge extraction on the non-fault image, to obtain an edge image of the non-fault image. The edge image reflects a contour of an object in the non-fault image in a form of lines.

The edge extraction model 810 may be a neural network model obtained through training. The edge extraction model 810 may be trained based on a public data set. The public data set includes a plurality of natural scene images and an annotated edge image corresponding to each image.

An initial edge extraction model is used to process a natural scene image in the public data set to obtain a training edge image. A parameter of the initial edge extraction model is adjusted based on a difference between the training edge image and an annotated edge image corresponding to the image, to minimize the difference. A difference between the training edge image and the annotated edge image corresponding to the natural scene image may be represented as a loss value. The model parameter is continuously adjusted until the loss value converges or a quantity of iterations exceeds a preset value.

The editing model 820 may edit and modify a target region in the edge image based on the fault edge image, to obtain a second edge image.

A fault edge image set may include a plurality of fault edge images. Before data processing is performed by using the system 800, data preparation may be performed to obtain the fault edge image set.

Image collection may be performed on a device having a surface defect to obtain a fault sample image. For example, image collection may be performed on a device having a surface defect in devices used in a project that needs to use the system 800. Alternatively, a fault sample image may be obtained through query and retrieval on the Internet. Edge extraction may be performed on the fault sample image, and an edge image corresponding to a fault region in an edge extraction result is used as a fault edge image. Alternatively, edge extraction may be performed on a fault region in the fault sample image, to obtain the fault edge image.

The fault sample image may be obtained by collecting objects of a same type or different types in the non-fault image. In other words, the fault edge image set may include fault edge images obtained by processing fault sample images obtained by collecting different objects.

The editing model 820 may select a fault edge image randomly or in a specific sequence from the fault edge image set, and edit and modify a target region in the edge image. For example, the editing model 820 may sequentially edit and modify a target region in a first edge image based on each fault edge image in the fault edge image set.

The editing model 820 may perform style transformation such as deformation (for example, stretching or compression) and brightness change on the fault edge image in the fault edge image set, and edit and modify the target region in the first edge image based on the fault edge image obtained through the style transformation.

A style transformation manner may be selected based on a user input. For example, an optional style transformation manner may be presented to the user, and a user input is obtained, to determine a style transformation manner corresponding to the user input. Alternatively, the style transformation manner may be determined in a default manner.

The style transformation is performed on the fault edge image, so that a style of a fault in the second edge image can be increased, and diversity of the fault image can be increased.

The image translation model 830 may process the second edge image to obtain the fault image. In other words, the image translation model 830 is configured to convert a line contour image into a natural scene image. The natural scene image may be a rendering image (namely, a color image).

The editing model 820 may determine the second edge image based on the fault edge image, the first edge image, and the target region. The target region may be obtained by processing the non-fault image by using the region generation model 840, or the target region may be determined based on user input information.

The user input information may indicate the target region. A manner in which the user input information indicates the target region may be set by default, or may be selected by the user. The user input information may indicate a location of one or more key points in the non-fault image.

If the user input information indicates a location of only one key point in the non-fault image, a rectangular target region that uses the key point as an intersection point of diagonals may be determined. A length of the target region is within a preset length range, a length-width ratio of the target region is within a preset length-width ratio range, and the length and a width of the target region are respectively parallel to two sides adjacent to the non-fault image.

If the user input information indicates locations of two key points in the non-fault image, a rectangular target region that uses the two key points as non-adjacent vertices may be determined, and a length and a width of the target region are respectively parallel to two sides adjacent to the non-fault image.

If the user input information indicates locations of more than two key points in the non-fault image, a rectangle that includes the plurality of key points and that has a smallest area may be determined as the target region.

It should be understood that, in comparison with a manner in which the user input information indicates the two key points, in a manner in which the user input information indicates the only one key point to indicate the target region, the obtained target region has high diversity, but has low rationality.

The editing model 820 may deform the fault edge image in the fault edge image set, so that a size of a deformed fault edge image is the same as a size of the target region. Therefore, the editing model 820 may replace the target region in the non-fault image with the deformed fault edge image, to form the second edge image.

The region generation model 840 may be obtained through training based on a plurality of training images and training region information in each training image. The plurality of training images may include the non-fault image processed by the system 800, and may also include another image.

When the system 800 processes a large quantity of non-fault images, the target region may be first determined based on the user input information corresponding to the non-fault image, and the editing module 820 replaces the target region in the first edge image obtained by the edge extraction module 810 by processing the non-fault image with the fault edge image, to form the second edge image.

A frame of the target region may be displayed in the non-fault image, the first edge image, and the second edge image. Therefore, the user can determine rationality of the target region. An inappropriate target region is adjusted or deleted.

After the system 800 obtains the large quantity of non-fault images and the user input information corresponding to each non-fault image, the region generation model 840 may be trained based on the plurality of non-fault images and the user input information corresponding to each non-fault image. For example, the region generation model 840 may be trained when a quantity of obtained user input information exceeds a preset quantity (for example, 100).

The non-fault image may be input into an initial region generation model. The initial region generation model processes the non-fault image to obtain training information. A parameter of the initial region generation model is adjusted based on a difference between the training information and annotation information corresponding to the non-fault image, to minimize the difference and complete one time of iteration. The annotation information corresponding to the non-fault image may be the user input information corresponding to the non-fault image, or may be the target region indicated by the user input information. An adjusted initial region generation model is used as an initial region generation model for next iteration, and another non-fault image is processed. When the difference between the training information and the annotation information corresponding to the non-fault image gradually converges, or a quantity of iterations reaches a preset value, the adjusted initial region generation model may be used as the region generation model 840.

In other words, in a process in which the system 800 adjusts the non-fault image based on the user input information to generate the fault image, the region generation model 840 may be trained by using the user input information obtained by the system 800 and the non-fault image corresponding to the user input information.

After the region generation model 840 is obtained through training, another non-fault image may be processed by using the region generation model 840, to determine a target region of each non-fault image. The editing module 820 replaces the target region in the first edge image obtained by the edge extraction module 810 by processing the non-fault image with the fault edge image, to form the second edge image.

If the target region determined by the region generation model 840 does not meet a requirement, the region generation model 840 may continue to be trained by using more non-fault images and user input information.

The system 800 determines the target region of the non-fault image by using the region generation model 840, so that the fault image can be automatically generated, to improve efficiency of generating the fault image and reduce labor costs.

The image translation model 830 may be obtained by training an initial image translation model by using a plurality of non-fault images and the first edge image that is obtained through processing of the edge extraction model. In other words, the image translation model 830 may be trained in a process of generating the fault image.

The plurality of non-fault images may be processed by using the edge extraction model 810, to obtain a first edge image corresponding to each non-fault image, and obtain data used for training the image translation model 830. Training the image translation model 830 requires a plurality of times of iteration, and each time of iteration includes: processing the first edge image by using the edge extraction model, to obtain a generated image; and adjusting a parameter of the initial image translation model based on a difference between the generated image and the non-fault image corresponding to the first edge image, to minimize the difference. Then, an adjusted initial image translation model may be used as an initial image translation model for next iteration. When the difference between the non-fault image and the generated image is less than a preset value or a quantity of iterations reaches a preset quantity of times, iteration may be stopped, and an adjusted initial image translation model is used as the image translation model 830.

The image translation model 830 is trained by using the non-fault image, so that the image translation model 830 obtained through training can be better applicable to an application scenario of the system 800, and authenticity of an image output by the system 800 is improved.

In some embodiments, the fault sample image and an edge corresponding to the fault sample image may also be used to train the image translation model 830. Therefore, accuracy of the fault image output by the image translation model 830 can be improved.

The image processing system 800 can migrate diversity of the non-fault image to the fault image. The image processing system 800 is used to form the second edge image by using the first edge image of the non-fault image and the fault edge image, and process the second edge image by using an image translation technology, to obtain the fault image.

Only the target region of the non-fault image is adjusted by using the fault edge image, to improve rationality and controllability of the fault image.

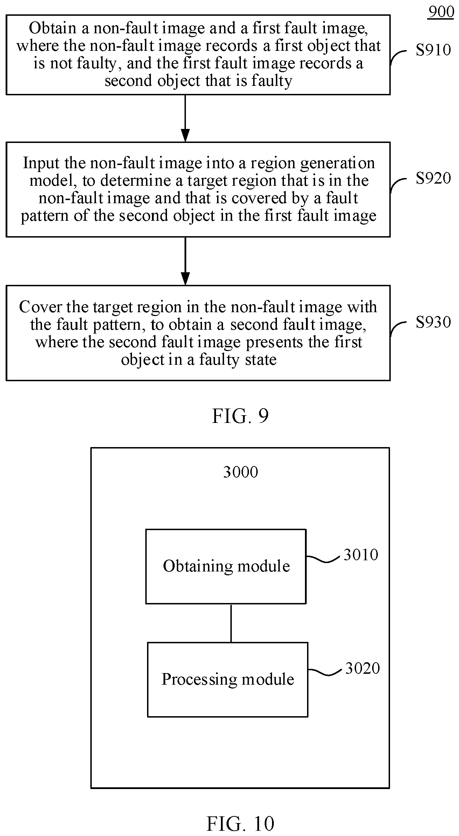

FIG. 9 is a schematic flowchart of a fault image generation method according to an embodiment of this application.

The method 900 includes S910 to S930.

S910: Obtain a non-fault image and a first fault image, where the non-fault image records a first object that is not faulty, and the first fault image records a second object that is faulty.

S920: Input the non-fault image into a region generation model, to determine a target region that is in the non-fault image and that is covered by a fault pattern of the second object in the first fault image.

S930: Cover the target region in the non-fault image with the fault pattern, to obtain a second fault image, where the second fault image presents the first object in a faulty state.

Through S910 to S930, the target region in the non-fault image is determined by using the region generation model, and the first fault image is used to cover the target region of the non-fault image, to obtain the second fault image, so that the target region is no longer determined manually. This can improve efficiency and reduce labor costs.

The first fault image may be obtained based on a fourth image. The first fault image may be a fault region in the fourth image. Alternatively, the fault image may be obtained by performing edge extraction on a fault region in the fourth image. The first fault image is obtained based on the fourth image, and the first fault image is not determined for a specific non-fault image.

Types of the first object and the second object may be the same or different. That is, the non-fault image and the first fault image may be obtained by collecting objects of a same type or different types.

The region generation model may be trained. A plurality of training images are obtained, where the training image records an object that is not faulty and that is of the same type as the first object. Region indication information is obtained, where the region indication information indicates a region in which a fault may be generated in the training image. The region generation model is trained based on the plurality of training images and the region indication information.

The region generation model is trained based on the training image that records the object that is not faulty and that is of the same type as the first object, and the region indication information indicating the region in which the fault may be generated in the training image, so that the region generation model is more targeted, the generated region generation model is applicable to the type of the first object, and accuracy of the target region determined by the region generation model is improved.

To improve applicability of the first fault image and diversity of the second fault image, the first fault image may be transformed, and a transformed fault pattern covers the target region of the non-fault image, to obtain the second fault image.

Shape transformation includes size stretching, compression, brightness change, or the like.

The foregoing describes the method embodiments provided in embodiments of this application with reference to FIG. 1 to FIG. 9. The following describes apparatus embodiments in embodiments of this application with reference to FIG. 10 to FIG. 12. It should be understood that descriptions of the method embodiments correspond to descriptions of the apparatus embodiments. Therefore, for a part that is not described in detail, refer to the foregoing descriptions.

FIG. 10 is a schematic diagram of a structure of a neural network training apparatus according to an embodiment of this application.

The neural network training system 3000 includes an obtaining module 3010 and a processing module 3020.

The obtaining module 3010 is configured to obtain a training image and region indication information, where the training image records an object that is not faulty, and the region indication information indicates a region in which a fault may be generated in the training image.

A type of the object recorded in the training image may be the same as a type of a first object.

The processing module 3020 is configured to train a region generation model based on a target location and a first image.

The system 3000 may further include a storage module, and the storage module may be configured to store the training image. The obtaining module 3010 may read the training image from the storage module, or the obtaining module 3010 may receive the training image sent by a device in which the storage module is located.

The obtaining module 3010 and the processing module 3020 may be deployed locally, and the storage module may be deployed locally or in a cloud.

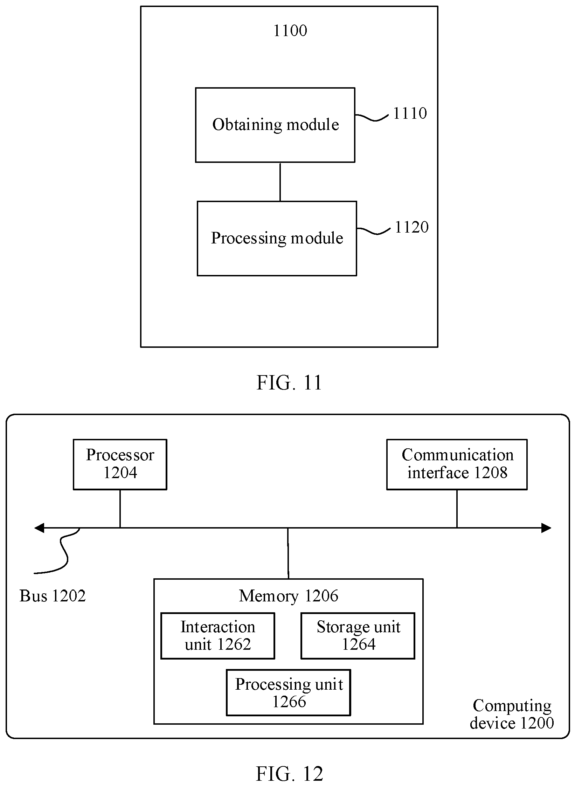

FIG. 11 is a schematic diagram of a structure of a fault image generation apparatus according to an embodiment of this application.

The fault image generation apparatus 1100 includes an obtaining module 1110 and a processing module 1120.

In some embodiments, the obtaining module 1110 is configured to obtain a non-fault image and a first fault image, where the non-fault image records a first object that is not faulty, the first fault image records a second object that is faulty, and a type of the first object is different from a type of the second object.

The processing module 1120 is configured to cover a fault pattern of the second object in the first fault image on the first object in the non-fault image, to obtain a second fault image, where the second fault image presents the first object in a faulty state.

Optionally, the processing module 1120 is configured to input the non-fault image into a region generation model, to determine a target region that is in the non-fault image and that is covered by the fault pattern.

Optionally, the obtaining module 1110 is further configured to obtain a plurality of training images, where the training image records an object that is not faulty and that is of a same type as the first object.

The obtaining module 1110 is further configured to obtain region indication information, where the region indication information indicates a region in which a fault may be generated in the training image.

The processing module 1120 is further configured to train the region generation model based on the plurality of training images and the region indication information.

Optionally, the processing module 1120 is further configured to perform shape transformation on the fault pattern.

The processing module 1120 is further configured to cover a transformed fault pattern on the target region in the non-fault image, to obtain the second fault image.

Optionally, the shape transformation includes size stretching, compression, or brightness change.

In some other embodiments, the obtaining module 1110 is configured to obtain a non-fault image and a first fault image, where the non-fault image records a first object that is not faulty, and the first fault image records a second object that is faulty.

The processing module 1120 is configured to input the non-fault image into a region generation model, to determine a target region that is in the non-fault image and that is covered by a fault pattern of the second object in the first fault image.

The processing module 1120 is further configured to cover the fault pattern on the target region in the non-fault image, to obtain a second fault image, where the second fault image presents the first object in a faulty state.

Optionally, a type of the first object is different from a type of the second object.

Optionally, the obtaining module 1110 is further configured to obtain a plurality of training images, where the training image records an object that is not faulty and that is of a same type as the first object.

The obtaining module 1110 is further configured to obtain region indication information, where the region indication information indicates a region in which a fault may be generated in the training image.

The processing module 1120 is further configured to train the region generation model based on the plurality of training images and the region indication information.

Optionally, the processing module 1120 is further configured to perform shape transformation on the fault pattern.

The processing module 1120 is further configured to cover a transformed fault pattern on the target region in the non-fault image, to obtain the second fault image.

Optionally, the shape transformation includes size stretching, compression, or brightness change.

The fault image generation apparatus 1100 may further include a storage module. The storage module may be configured to store the first fault image, or may be configured to store the non-fault image. The obtaining module 3010 and the processing module 3020 may be deployed locally, and the storage module may be deployed locally or in a cloud.

FIG. 12 is a schematic diagram of a structure of a computing device according to an embodiment of this application.

The computing device 1200 includes a bus 1202, a processor 1204, a memory 1206, and a communication interface 1208. The processor 1204, the memory 1206, and the communication interface 1208 communicate with each other through the bus 1202. The computing device 1200 may be a server or a terminal device. It should be understood that quantities of processors and memories in the computing device 1200 are not limited in this application.

The bus 1202 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 12. However, this does not indicate that there is only one bus or only one type of bus. The bus 1202 may include a path for transferring information between various components (for example, the memory 1206, the processor 1204, and the communication interface 1208) of the computing device 1200.

The processor 1204 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1206 may include a volatile memory (volatile memory), for example, a random access memory (random access memory, RAM). The processor 1204 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1206 stores executable program code, and the processor 1204 executes the executable program code to implement the foregoing fault image generation method. Specifically, the memory 1206 stores instructions for performing the fault image generation method.

The communication interface 1203 uses a transceiver module, for example, but not limited to, a network interface card or a transceiver, to implement communication between the computing device 1200 and another device or a communication network.

It should be noted that, although only the memory, the processor, and the communication interface are shown in the computing device 12000, in a specific implementation process, a person skilled in the art should understand that the apparatus 12000 may further include another component required for implementing normal running. In addition, based on a specific requirement, a person skilled in the art should understand that the apparatus 12000 may further include a hardware component for implementing another additional function. In addition, a person skilled in the art should understand that the apparatus 12000 may alternatively include only a component required for implementing embodiments of this application, and does not need to include all components shown in FIG. 12.

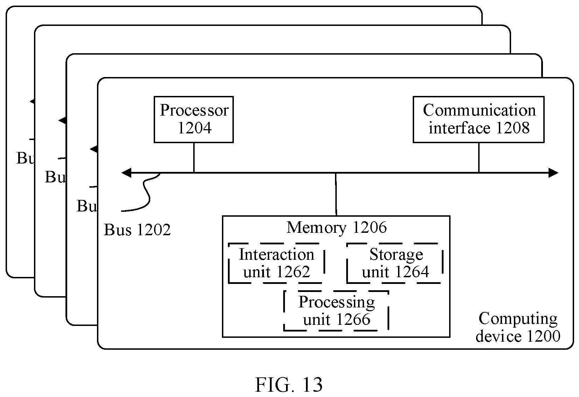

FIG. 13 is a schematic diagram of a structure of a computing device cluster according to an embodiment of this application.

As shown in FIG. 13, the computing device cluster includes at least one computing device 1200. A memory 1206 in one or more computing devices 1200 in the computing device cluster may store instructions for performing the fault image generation method.

In some possible implementations, one or more computing devices 1200 in the computing device cluster may also be configured to execute some instructions of the fault image generation method. In other words, a combination of one or more computing devices 1200 may jointly execute the instructions of the fault image generation method.

It should be noted that memories 1206 in different computing devices 1200 in the computing device cluster may store different instructions, to perform some steps in the fault image generation method.

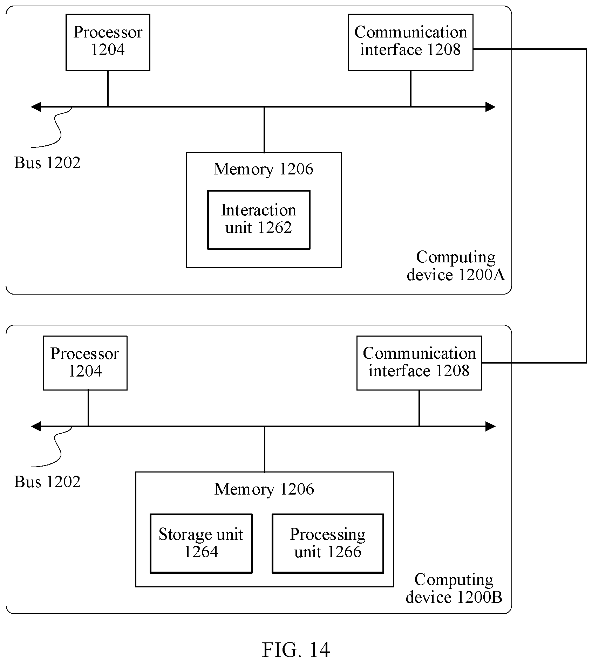

FIG. 14 shows a possible implementation. As shown in FIG. 14, two computing devices 1200A and 1200B are connected through a communication interface 1208. A memory in the computing device 1200A stores instructions for performing functions of an interaction unit 1262 and a processing unit 1266. A memory in the computing device 1200B stores instructions for performing functions of a storage unit 1264. In other words, the memories 1206 of the computing devices 1200A and 1200B jointly store instructions for performing the fault image generation method.

A connection manner between computing device clusters shown in FIG. 14 may be based on a consideration that a large amount of data collected by radar or a camera needs to be stored in the fault image generation method provided in this application. Therefore, it is considered that a storage function is performed by the computing device 1200B.

It should be understood that functions of the computing device 1200A shown in FIG. 14 may also be implemented by a plurality of computing devices 1200. Similarly, functions of the computing device 1200B may also be implemented by a plurality of computing devices 1200.

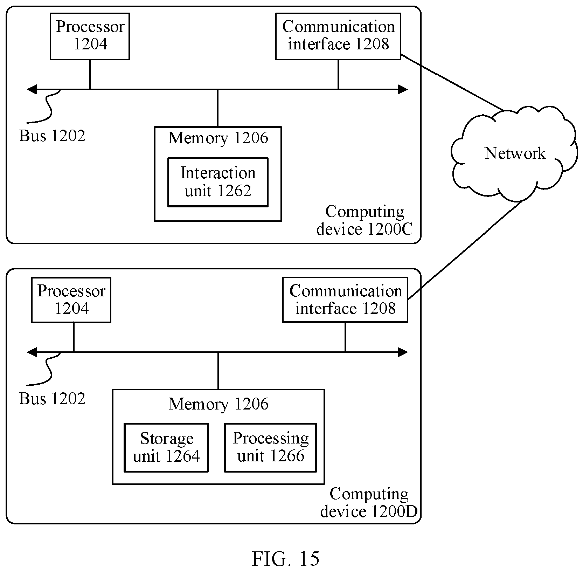

In some possible implementations, the one or more computing devices in the computing device cluster may be connected through a network. The network may be a wide area network, a local area network, or the like. FIG. 15 shows a possible implementation. As shown in FIG. 15, two computing devices 1200C and 1200D are connected through a network. Specifically, communication interfaces in the computing devices are connected to the network. In this possible implementation, a memory 1206 in the computing device 1200C stores instructions for executing an interaction unit 1262. In addition, a memory 1206 in the computing device 1200D stores instructions for executing a storage unit 1264 and a processing unit 1266.

A connection manner between computing device clusters shown in FIG. 15 may be based on a consideration that, in the fault image generation method provided in this application, a large quantity of first fault images need to be stored, and a large quantity of calculations need to be performed to determine a second fault image. Therefore, it is considered that functions implemented by the storage unit 1264 and the processing unit 1266 are performed by the computing device 1200D.

It should be understood that functions of the computing device 1200C shown in FIG. 10 may also be implemented by a plurality of computing devices 1200. Similarly, functions of the computing device 1200D may also be implemented by a plurality of computing devices 1200.

An embodiment of this application provides a computer-readable medium. The computer-readable medium stores program code to be executed by a device, and the program code is used to perform the foregoing fault image generation method.

An embodiment of this application provides a computer program product including instructions. When the computer program product runs on a computer, the computer is enabled to perform the foregoing fault image generation method.

An embodiment of this application provides a chip. The chip includes a processor and a data interface. The processor reads, through the data interface, instructions stored in a memory, to perform the foregoing fault image generation method.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded or executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In the several embodiments provided in this application, it should be understood that the disclosed system, apparatus and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A fault image generation method, comprising:

   obtaining a non-fault image and a first fault image, wherein the non-fault image records a first object that is not faulty, the first fault image records a second object that is faulty, and a type of the first object is different from a type of the second object; and
   migrating a fault pattern of the second object in the first fault image to the first object in the non-fault image, to obtain a second fault image, wherein the second fault image presents the first object in a faulty state.

2. The method according to claim 1, wherein before the migrating a fault pattern of the second object in the first fault image to the first object in the non-fault image, to obtain a second fault image, the method comprises:
   inputting the non-fault image into a region generation model, to determine a target region that is in the non-fault image and to which the fault pattern is migrated.

3. The method according to claim 2, wherein before the inputting the non-fault image into a region generation model, to determine a target region that is in the non-fault image and to which the fault pattern is migrated, the method comprises:

   obtaining a plurality of training images, wherein the training image records an object that is not faulty and that is of a same type as the first object;
   obtaining region indication information, wherein the region indication information indicates a region in which a fault may be generated in the training image; and

training the region generation model based on the plurality of training images and the region indication information.

4. The method according to claims 1 to 3, wherein the migrating a fault pattern of the second object in the first fault image to the first object in the non-fault image, to obtain a second fault image comprises:

   performing shape transformation on the fault pattern; and
   migrating a transformed fault pattern to the target region in the non-fault image, to obtain the second fault image.

5. The method according to claim 4, wherein the shape transformation comprises size stretching, compression, or brightness change.

6. A fault image generation method, wherein the method comprises:

   obtaining a non-fault image and a first fault image, wherein the non-fault image records a first object that is not faulty, and the first fault image records a second object that is faulty;
   inputting the non-fault image into a region generation model, to determine a target region in the non-fault image; and
   migrating a fault pattern to the target region in the non-fault image, to obtain a second fault image, wherein the second fault image presents the first object in a faulty state.

7. The method according to claim 6, wherein a type of the first object is different from a type of the second object.

8. The method according to claim 6 or 7, wherein before the inputting the non-fault image into a region generation model, to determine a target region in the non-fault image, the method further comprises:

   obtaining a plurality of training images, wherein the training image records an object that is not faulty and that is of a same type as the first object;
   obtaining region indication information, wherein the region indication information indicates a region in which a fault may be generated in the training image; and
   training the region generation model based on the plurality of training images and the region indication information.

9. The method according to any one of claims 6 to 8, wherein the migrating a fault pattern to the target region in the non-fault image, to obtain a second fault image comprises:

   performing shape transformation on the fault pattern; and
   migrating a transformed fault pattern to the target region in the non-fault image, to obtain the second fault image.

10. The method according to claim 9, wherein the shape transformation comprises size stretching, compression, or brightness change.

11. A fault image generation system, comprising an obtaining module and a processing module, wherein

   the obtaining module is configured to obtain a non-fault image and a first fault image, wherein the non-fault image records a first object that is not faulty, the first fault image records a second object that is faulty, and a type of the first object is different from a type of the second object; and
   the processing module is configured to migrate a fault pattern of the second object in the first fault image to the first object in the non-fault image, to obtain a second fault image, wherein the second fault image presents the first object in a faulty state.

12. The system according to claim 11, wherein the processing module is configured to input the non-fault image into a region generation model, to determine a target region that is in the non-fault image and to which the fault pattern is migrated.

13. The system according to claim 12, wherein

   the obtaining module is further configured to obtain a plurality of training images, wherein the training image records an object that is not faulty and that is of a same type as the first object;

the obtaining module is further configured to obtain region indication information, wherein the region indication information indicates a region in which a fault may be generated in the training image; and

the processing module is configured to train the region generation model based on the plurality of training images and the region indication information.

14. The system according to any one of claims 11 to 13, wherein the processing module is configured to: perform shape transformation on the fault pattern; and migrate a transformed fault pattern to the target region in the non-fault image, to obtain the second fault image.

15. The system according to claim 14, wherein the transformation comprises stretching, compression, or brightness change.

16. A fault image generation system, comprising an obtaining module and a processing module, wherein

the obtaining module is configured to obtain a non-fault image and a first fault image, wherein the non-fault image records a first obj ect that is not faulty, and the first fault image records a second object that is faulty;

the processing module is configured to input the non-fault image into a region generation model, to determine a target region in the non-fault image; and migrate a fault image to the target region in the non-fault image, to obtain a second fault image, wherein the second fault image presents the first object in a faulty state.

17. The system according to claim 16, wherein a type of the first object is different from a type of the second object.

18. The system according to claim 16 or 17, wherein the obtaining module is configured to obtain a plurality of training images and region indication information, wherein the training image records an object that is not faulty and that is of a same type as the first object, and the region indication information indicates a region in which a fault may be generated in the training image; and the processing module is configured to train the region generation model based on the plurality of training images and the region indication information.

19. The system according to any one of claims 16 to 18, wherein the processing module is further configured to: perform shape transformation on the fault pattern; and migrate a transformed fault pattern to the target region in the non-fault image, to obtain the second fault image.

20. The system according to any one of claims 16 to 19, wherein the shape transformation comprises stretching, compression, or brightness change.

21. A computing device cluster, comprising at least one computing device, wherein each computing device comprises a processor and a memory; and

the processor in the at least one computing device is configured to execute instructions stored in the memory in the at least one computing device, so that the computing device cluster performs the method according to any one of claims 1 to 10.

22. A computer program product comprising instructions, wherein when the instructions are run by a computing device cluster, the computer device cluster is enabled to perform the method according to any one of claims 1 to 10.

23. A computer-readable storage medium, comprising computer program instructions, wherein when the computer program instructions are executed by a computing device cluster, the computing device cluster performs the method according to any one of claims 1 to 10.

Data collection
device 160

System architecture 100

Data stream

Database
130

Training device
120

Data
stream

Execution device 110

Client device
140

Input
data

I/O interface 112

Target model/rule 101

Computing module 111

Data storage
system 150

Output
result

Preprocessing module 113

Preprocessing module 114

FIG. 1

Image processing result

Neural network layer 230

Output layer 240

Hidden layer n (23n)

Hidden layer 2 (232)

Hidden layer 1 (231)

Convolutional layer/ Pooling layer 220

226

225

224

223

222

221

Convolutional neural network (CNN)

200

Input layer 210

To-be-processed image

FIG. 2

Image processing result

Output layer 140

Hidden layer n (13n)

Hidden layer 2 (132)

Hidden layer 1 (131)

Neural network layer 130

| 126 | 126 | 126 |
| 125 | 125 | 125 |
| 124 | 124 | 124 |
| 123 | 123 | 123 |
| 122 | 122 | 122 |
| 121 | 121 | 121 |

Convolutional layer/ Pooling layer 120

Convolutional neural network (CNN) 100

Input layer 110

Input layer 110

To-be-processed image

FIG. 3

Weight memory 502

Input memory 501

Operation circuit 503

Vector computing unit 507

Accumulator 508

Direct memory access controller 505

Unified memory 506

Controller 504

Instruction fetch buffer 509

Host CPU

External memory

Bus interface unit 510

Neural-network processing unit 50

FIG. 4

FIG. 5

FIG. 6

700

Obtain a non-fault image and a first fault image, where the non-fault image records a first object that is not faulty, the first fault image records a second object that is faulty, and a type of the first object is different from a type of the second object

S710

Cover the first object in the non-fault image with a fault pattern of the second object in the first fault image, to obtain a second fault image, where the second fault image presents the first object in a faulty state

S720

FIG. 7

Fault edge image set

Fault edge image

First edge image

Second edge image

800

Edge extraction model 810

Editing model 820

Image translation model 830

Fault image

Normal image

Region generation model 840

Target region

User input information

FIG. 8

900

```
┌─────────────────────────────────────────┐
│ Obtain a non-fault image and a first fault image,│
│ where the non-fault image records a first object that│  S910
│ is not faulty, and the first fault image records a│
│ second object that is faulty│
└─────────────────────────────────────────┘
                    │
                    ▼
┌─────────────────────────────────────────┐
│ Input the non-fault image into a region generation│
│ model, to determine a target region that is in the│  S920
│ non-fault image and that is covered by a fault│
│ pattern of the second object in the first fault image│
└─────────────────────────────────────────┘
                    │
                    ▼
┌─────────────────────────────────────────┐
│ Cover the target region in the non-fault image with│
│ the fault pattern, to obtain a second fault image,│  S930
│ where the second fault image presents the first│
│ object in a faulty state│
└─────────────────────────────────────────┘
```

FIG. 9

```
┌───────────────────────────────────────┐
│                3000                    │
│   ┌─────────────────────────┐          │
│   │                         │          │
│   │   Obtaining module      │~ 3010    │
│   │                         │          │
│   └────────────┬────────────┘          │
│                │                       │
│   ┌────────────┴────────────┐          │
│   │                         │          │
│   │   Processing module     │~ 3020    │
│   │                         │          │
│   └─────────────────────────┘          │
│                                        │
└───────────────────────────────────────┘
```

FIG. 10

1100

Obtaining module ⌇ 1110

Processing module ⌇ 1120

FIG. 11

Processor 1204

Communication interface 1208

Bus 1202

Memory 1206

Interaction unit 1262

Storage unit 1264

Processing unit 1266

Computing device 1200

FIG. 12

Processor
1204

Communication
interface 1208

Bu

Bu

Bu

Bus 1202

Memory 1206

Interaction
unit 1262

Storage
unit 1264

Processing
unit 1266

Computing
device 1200

FIG. 13

Processor
1204

Communication
interface 1208

Bus 1202

Memory 1206

Interaction
unit 1262

Computing
device 1200A

Processor
1204

Communication
interface 1208

Bus 1202

Memory 1206

Storage unit
1264

Processing
unit 1266

Computing
device 1200B

FIG. 14

FIG. 15

## INTERNATIONAL SEARCH REPORT

International application No.

**PCT/CN2021/139429**

| A. | CLASSIFICATION OF SUBJECT MATTER |
|---|---|

G06T 7/00(2017.01)i

According to International Patent Classification (IPC) or to both national classification and IPC

| B. | FIELDS SEARCHED |
|---|---|

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

DWPI, CNABS, CNKI, CNTXT, USTXT, WOTXT, EPTXT: 图像, 图案, 图层, 故障, 迁移, 覆盖, 叠加, 训练, 区域, 模型, image, faulty, migrat+, overlay, train, region, model

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110909669 A (HUNAN GUOAO POWER EQUIPMENT CO., LTD.; YUAN MAOYIN) 24 March 2020 (2020-03-24) description, paragraphs [0040]-[0096] | 1-23 |
| Y | CN 102216085 A (ARMSTRONG WORLD INDUSTRIES, INC.) 12 October 2011 (2011-10-12) description, paragraphs [0021]-[0035] | 1-23 |
| A | CN 111091546 A (HARBIN KEJIA GENERAL MECHANICAL & ELECTRICAL CO., LTD.) 01 May 2020 (2020-05-01) entire document | 1-23 |
| A | US 2012050377 A1 (UESHIMA, M.) 01 March 2012 (2012-03-01) entire document | 1-23 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 January 2022** | **01 March 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/139429**

| Patent document cited in search report | | | Publication date (day/month/year) | Patent family member(s) | | | Publication date (day/month/year) |
|---|---|---|---|---|---|---|---|
| CN | 110909669 | A | 24 March 2020 | None | | | |
| CN | 102216085 | A | 12 October 2011 | US | 2010068385 | A1 | 18 March 2010 |
| | | | | US | 8496779 | B2 | 30 July 2013 |
| | | | | TW | 201012657 | A | 01 April 2010 |
| | | | | TW | I515119 | B | 01 January 2016 |
| | | | | CN | 103395304 | A | 20 November 2013 |
| | | | | CN | 103395304 | B | 12 August 2015 |
| | | | | US | 2014162002 | A1 | 12 June 2014 |
| | | | | US | 9062464 | B2 | 23 June 2015 |
| | | | | WO | 2010033145 | A1 | 25 March 2010 |
| | | | | CN | 102216085 | B | 04 September 2013 |
| CN | 111091546 | A | 01 May 2020 | None | | | |
| US | 2012050377 | A1 | 01 March 2012 | JP | 2012045831 | A | 08 March 2012 |
| | | | | JP | 5457307 | B2 | 02 April 2014 |
| | | | | CN | 102381026 | A | 21 March 2012 |
| | | | | CN | 102381026 | B | 25 March 2015 |
| | | | | EP | 2422984 | A1 | 29 February 2012 |
| | | | | EP | 2422984 | B1 | 07 May 2014 |
| | | | | US | 8567896 | B2 | 29 October 2013 |

Form PCT/ISA/210 (patent family annex) (January 2015)